# FASCICULE DE BREVET EUROPEEN

(11) **EP 2 682 825 B1**
(45) Date de publication et mention de la délivrance du brevet: **18.09.2019**
(21) Numéro de dépôt: 13175165.3
(22) Date de dépôt: 04.07.2013
(51) Int. Cl.: G05B 15/02, E06B 9/32, E06B 9/68

(54) **Procédé et dispositif de commande d au moins un dispositif d occultation d au moins une ouverture d une pièce d un bâtiment**
Verfahren und Vorrichtung zur Steuerung mindestens einer Verdunkelungsvorrichtung für mindestens ein Öffnungselement eines Gebäudeteils
Method and device for controlling at least one device for concealing at least one opening of a room in a building

(30) Priorité: 06.07.2012 FR 1256500
(43) Date de publication de la demande: 08.01.2014
(73) Titulaire: Delta Dore, 35270 Bonnemain (FR)
(72) Inventeur: Le, Duc Minh Khang, 35270 Bonnemain (FR); Bourdais, Romain, 35270 Bonnemain (FR); Gueguen, Hervé, 35270 Bonnemain (FR); Plevin, Jacques, 35270 Bonnemain (FR)
(74) Mandataire: Cabinet Le Guen Maillet

(56) Documents cités:
- EP-A1- 2 093 372
- CA-A1- 2 327 648

## Description

La présente invention concerne un procédé et dispositif de détermination des conditions climatiques d'une journée pour commander au moins un dispositif d'apport d'énergie naturelle.

Plus particulièrement, l'invention se situe dans le domaine de la gestion de la température d'une pièce d'un bâtiment.

La gestion de température d'une pièce d'un bâtiment à l'aide d'apport énergétiques naturels, tels que par le chauffage ou le rafraîchissement d'une pièce à l'aide d'énergie géothermique ou le chauffage par l'énergie solaire permet de diminuer grandement la consommation de l'énergie fossile.

L'apport énergétique du rayonnement solaire est un élément non négligeable dans une pièce. Celui-ci contribue à réduire les besoins en énergie fossile ou électrique nécessaires au chauffage de la pièce en période hivernale mais peut contribuer à augmenter les besoins en énergie fossile ou électrique nécessaires au rafraîchissement de la pièce en période estivale.

Selon les saisons, différentes solutions pour la gestion de la température d'une pièce sont possibles. Lorsque l'on se situe dans une période hivernale, les apports en énergie solaire dans une pièce ne risquent pas d'augmenter la température de la pièce jusqu'à incommoder les occupants de la pièce. Il est donc intéressant de favoriser l'apport en énergie solaire pendant la saison hivernale. Lorsque l'on se situe dans une période estivale, les apports en énergie solaire dans une pièce risquent d'augmenter la température de la pièce jusqu'à incommoder les occupants de la pièce. Il est donc intéressant de limiter l'apport en énergie solaire pendant la saison estivale.

En automne et au printemps, les apports en énergie solaire dans une pièce ne risquent pas d'augmenter la température de la pièce jusqu'à incommoder les occupants de la pièce. Il est donc intéressant de favoriser l'apport en énergie solaire pendant ces saisons.

Aujourd'hui, les climats habituels des saisons sont beaucoup plus variables. A une saison donnée, correspondait bien souvent un climat donné, aujourd'hui il est souvent difficile de prédire les conditions climatiques au cours d'une année.

L'invention vise à trouver une méthode de détermination des conditions climatiques d'une journée de manière à optimiser les apports énergétiques naturels de manière à garantir que les besoins en énergie fossile ou électrique nécessaires au chauffage ou au rafraichissement de la pièce soient réduits.

Selon un premier aspect de l'invention, l'invention concerne un procédé de détermination des conditions climatiques d'une journée pour commander au moins un dispositif d'apport d'énergie naturelle pour une pièce d'un bâtiment, caractérisé en ce que le procédé comporte les étapes de :
- obtention d'une température extérieure au bâtiment au lever du soleil,
- comparaison de la température extérieure obtenue à un premier seuil prédéterminé,
- détermination des conditions climatiques pour la journée en fonction du résultat de la comparaison de la température extérieure obtenue au premier seuil prédéterminé,
- détermination d'au moins un paramètre de commande du au moins un dispositif d'apport d'énergie naturelle en fonction des conditions climatiques déterminées.

Corrélativement, l'invention concerne un dispositif de détermination des conditions climatiques d'une journée pour commander au moins un dispositif d'apport d'énergie naturelle pour une pièce d'un bâtiment, caractérisé en ce que le dispositif comporte :
- des moyens d'obtention d'une température extérieure au bâtiment au lever du soleil,
- des moyens de comparaison de la température extérieure obtenue à un premier seuil prédéterminé,
- des moyens de détermination des conditions climatiques pour la journée en fonction du résultat de la comparaison de la température extérieure obtenue au premier seuil prédéterminé,
- des moyens de détermination d'au moins un paramètre de commande du au moins un dispositif d'apport d'énergie naturelle en fonction des conditions climatiques déterminées.

Ainsi, en prenant en compte la température extérieure du bâtiment au lever du soleil pour déterminer les conditions climatiques pour la journée et d'en déduire au moins un paramètre de commande du au moins un dispositif d'apport d'énergie naturelle, les inventeurs de la présente invention ont amélioré de manière non négligeable le confort dans la pièce tout en limitant les besoins en énergie fossile.

En effet, la température extérieure au lever du jour est particulièrement représentative des conditions climatiques dans l'environnement du bâtiment.

Selon un autre aspect de l'invention, la température extérieure est comparée à un second seuil prédéterminé compris entre 9 et 11 degrés et en ce que si la température extérieure est inférieure au second seuil prédéterminé, les conditions climatiques sont hivernales, si la température extérieure est comprise entre le premier et le second seuils prédéterminés, les conditions climatiques sont automnales ou printanières et si la température supérieure au premier seuil prédéterminé, les conditions climatiques sont estivales.

Ainsi la présente invention est particulièrement adaptée aux régions tempérées souvent soumises à des conditions climatiques inhabituelles au cours des saisons et fournit ainsi de meilleurs résultats que des méthodes qui seraient basées sur les saisons.

Selon un autre aspect de l'invention, le dispositif d'apport d'énergie naturelle est un dispositif d'occultation d'au moins une ouverture de la pièce.

Ainsi, les apports en énergie provenant d'un rayonnement solaire sont optimisés. Il est ainsi possible de limiter l'apport d'énergie lié au rayonnement solaire lorsque les conditions climatiques au lever du soleil correspondent à une période estivale.

Selon un autre aspect de l'invention, le paramètre de commande déterminé en fonction des conditions climatiques déterminées est une position d'occultation partielle de l'ouverture.

Ainsi, les apports en énergie provenant d'un rayonnement solaire sont optimisés. Il est ainsi possible de limiter l'apport d'énergie liée au rayonnement solaire lorsque les conditions climatiques au lever du soleil correspondent à une période estivale ou au contraire de favoriser l'apport d'énergie liée au rayonnement solaire lorsque les conditions climatiques au lever du soleil ne correspondent pas à une période estivale.

Selon un autre aspect de l'invention, on obtient la température de la pièce (106) du bâtiment et on compare la température de la pièce du bâtiment avec au moins un troisième seuil de température et en la valeur du au moins un troisième seuil de température dépend des conditions climatiques déterminées.

Ainsi, la présente invention permet de contrôler l'apport d'énergie lié au rayonnement solaire en fonction de la température de la au moins une pièce et d'assurer ainsi un meilleur confort des personnes présentes dans la au moins une pièce.

Selon un autre aspect de l'invention, on obtient une valeur du rayonnement solaire, on compare la valeur du rayonnement solaire obtenu avec au moins un seuil de comparaison et le seuil de comparaison du rayonnement solaire est déterminé en fonction des conditions climatiques déterminées.

Ainsi, les apports en énergie provenant d'un rayonnement solaire sont optimisés.

Selon un autre aspect de l'invention, le seuil de comparaison du rayonnement solaire est en outre déterminé en fonction de l'heure à laquelle la température de la pièce (106) du bâtiment et le rayonnement solaire sont obtenus.

Ainsi, la présente invention est adaptée aux variations journalières des conditions d'ensoleillement.

Selon un autre aspect de l'invention, le procédé est exécuté itérativement, le dispositif d'occultation est commandé pour prendre trois positions différentes et le procédé comporte en outre une étape d'annulation de la commande du dispositif d'occultation qui est dépendante de la position du dispositif d'occultation lors de la précédente itération et des conditions climatiques déterminées.

Ainsi, la présente invention permet de réaliser une temporisation sur l'ouverture ou la fermeture du dispositif d'occultation qui peut varier au cours du temps.

Selon un autre aspect de l'invention, si les conditions climatiques déterminées sont estivales, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

Ainsi, la présente invention permet de réaliser une temporisation sur l'ouverture ou la fermeture du dispositif d'occultation qui peut varier au cours du temps et limiter les apports thermiques liés au rayonnement solaire.

Selon un autre aspect de l'invention, si les conditions climatiques déterminées ne sont pas sont estivales, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

Ainsi, la présente invention permet de réaliser une temporisation sur l'ouverture ou la fermeture du dispositif d'occultation qui peut varier au cours du temps et favoriser les apports thermiques liés au rayonnement solaire ainsi que les apports en luminosité liés au rayonnement solaire.

Selon un autre aspect de l'invention, si le mode dans lequel le dispositif de commande de chauffage de la au moins une pièce est le mode de contrôle de chauffage, le procédé comporte en outre une étape de prise en compte de la température de consigne de la au moins une pièce et de modification d'au moins un seuil de température.

Ainsi, il est possible de prendre en compte les préférences de chauffage de l'habitant de l'habitation.

Selon un autre aspect de l'invention, on compte le nombre d'ouverture ou de fermeture journalier du dispositif d'occultation d'au moins une ouverture d'une pièce du bâtiment et on limite le nombre d'ouverture ou de fermeture journalier du dispositif d'occultation.

Ainsi, la durée de vie des moteurs entrainant l'ouverture ou la fermeture du dispositif d'occultation d'au moins une ouverture d'une pièce du bâtiment est augmentée.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par au moins un système informatique.

Les avantages du système étant identiques à ceux précédemment mentionnés, ceux-ci ne seront pas rappelés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 représente un bâtiment dans lequel la présente invention est implémentée ;
- la Fig. 2 représente un schéma bloc d'un dispositif de commande d'au moins un dispositif d'occultation d'au moins une ouverture selon la présente invention ;
- la Fig. 3 représente un exemple de courbe de variation du rayonnement solaire sur une période de vingt quatre heures ainsi que des droites permettant la décision de la commande d'au moins un dispositif d'occultation d'au moins une ouverture selon la présente invention ;
- la Fig. 4 représente un diagramme illustrant l'algorithme général exécuté par le dispositif de commande d'au moins un dispositif d'occultation d'au moins une ouverture selon la présente invention ;
- la Fig. 5 représente un diagramme illustrant l'algorithme exécuté par le dispositif de commande pour l'exécution de la fonction criticité selon la présente invention ;
- la Fig. 6a représente un diagramme illustrant l'algorithme exécuté par le dispositif de commande pour la détermination, en période de fort ensoleillement , de la fonction paramètre volet permettant la décision de la commande d'au moins un dispositif d'occultation d'au moins une ouverture selon la présente invention ;
- la Fig. 6b représente un diagramme illustrant l'algorithme exécuté par le dispositif de commande pour la détermination, en période de faible ensoleillement, de la fonction paramètre volet permettant la décision de la commande d'au moins un dispositif d'occultation d'au moins une ouverture selon la présente invention ;
- la Fig. 7 représente un diagramme illustrant l'algorithme exécuté par le dispositif de commande pour la détermination d'un paramètre de décision de la commande d'au moins un dispositif d'occultation d'au moins une ouverture selon la présente invention ;
- la Fig. 8a représente un diagramme illustrant l'algorithme exécuté par le dispositif de commande pour la gestion, en période de faible ensoleillement, d'une fonction pour la commande d'au moins un dispositif d'occultation d'au moins une ouverture selon la présente invention ;
- la Fig. 8b représente un diagramme illustrant l'algorithme exécuté par le dispositif de commande pour la gestion, en période de fort ensoleillement, d'une temporisation pour la commande d'au moins un dispositif d'occultation d'au moins une ouverture selon la présente invention ;
- la Fig. 9 représente un diagramme illustrant l'algorithme exécuté par le dispositif de commande pour la détermination, en période de fort ensoleillement, de différentes positions d'au moins un dispositif d'occultation d'au moins une ouverture selon la présente invention ;
- la Fig. 10 représente un diagramme illustrant l'algorithme exécuté par le dispositif de commande pour la détermination d'un paramètre de commande d'au moins un dispositif d'occultation d'au moins une ouverture selon la présente invention ;
- la Fig. 11 représente un exemple de mesures de la consommation journalière d'une climatisation en fonction de la température extérieure au lever du soleil ;
- la Fig. 12 représente un exemple de mesures de la consommation journalière du chauffage en fonction de la température extérieure au lever du soleil.

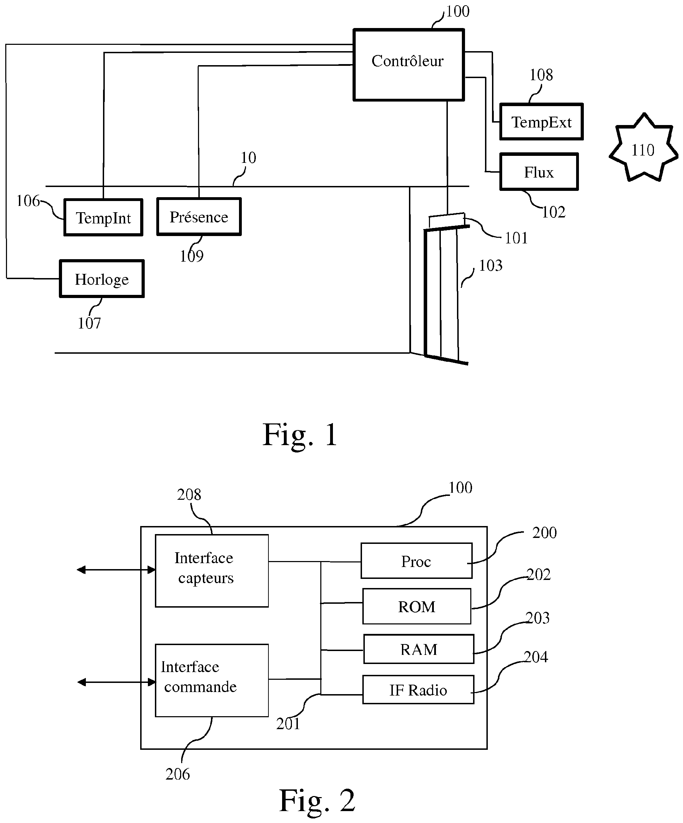

La Fig. 1 représente un bâtiment dans lequel la présente invention est implémentée.

Le bâtiment comporte au moins une pièce 10 disposant d'au moins une ouverture 103 orientée dans une direction telle que le rayonnement solaire contribue au chauffage de la pièce 10.

L'ouverture 103 peut être occultée par un dispositif d'occultation 101 tel que par exemple un volet roulant motorisé 101 ou un store motorisé.

L'ouverture 103 est, dans un pignon du bâtiment par exemple et de manière non limitative, orientée au sud, à l'est ou au nord.

L'ouverture 103 peut aussi être une ouverture dans le toit du bâtiment par exemple et de manière non limitative orientée au sud, à l'est ou à l'ouest.

Selon la présente invention, un dispositif de commande 100, ou contrôleur, pilote le volet roulant 101.

Au contrôleur 100 sont reliés un capteur de rayonnement 102 du rayonnement du soleil 110, un capteur de température 108 placé à l'extérieur du bâtiment, un capteur de température 106 de la pièce 10 ou du bâtiment, une horloge 107 et éventuellement un capteur de présence 109.

L'horloge 107 est une horloge apte à fournir une information permettant de déterminer l'heure.

Selon un mode particulier de la présente invention, les conditions climatiques sont déterminées à partir de la température mesurée par le capteur de température 108 au lever du soleil.

L'heure du lever du soleil est par exemple déterminée lorsque le capteur de rayonnement solaire lorsque celui dépasse une valeur comprise entre 5 et 10m W/m² prédéterminée ou est donnée par l'horloge 107 lorsque celle est une horloge astronomique et est une heure comprise entre 4 et 6 heures du matin, préférentiellement à 5 heures du matin.

Si la température mesurée le capteur de température au lever du soleil voire plus ou moins une heure est inférieure à 10 degrés, la saison est considérée être l'hiver.

Si la température mesurée le capteur de température 108 au lever du soleil voire plus ou moins une heure est supérieure à 10 degrés et inférieure à 16 degrés, la saison est considérée être le printemps ou l'automne.

Si la température mesurée le capteur de température 108 au lever du soleil voire plus ou moins une heure est supérieure à 16 degrés, la saison est considérée être l'été.

Bien entendu, les valeurs de 10 et/ou 16 degrés sont des modes préférés de réalisation de la présente invention et l'homme du métier comprendra aisément que ces valeurs de températures peuvent varier de plus ou moins deux degrés.

Il est à remarquer que le contrôleur 100, l'horloge 107, le capteur de température 106 peuvent être regroupés en un unique dispositif de commande et de programmation.

Selon la présente invention, la détermination des conditions climatiques d'une journée pour commander au moins un dispositif d'apport d'énergie naturelle pour une pièce d'un bâtiment est effectuée en :
- obtenant une température extérieure au bâtiment au lever du soleil,
- comparant la température extérieure obtenue à un premier seuil prédéterminé,
- déterminant les conditions climatiques pour la journée en fonction du résultat de la comparaison de la température extérieure obtenue au premier seuil prédéterminé compris entre 15 et 17 degrés,
- en déterminant au moins un paramètre de commande du au moins un dispositif d'apport d'énergie naturelle en fonction des conditions climatiques déterminées.

La **Fig. 2** représente un schéma bloc d'un dispositif de pilotage d'au moins un dispositif d'occultation d'au moins une ouverture selon la présente invention.

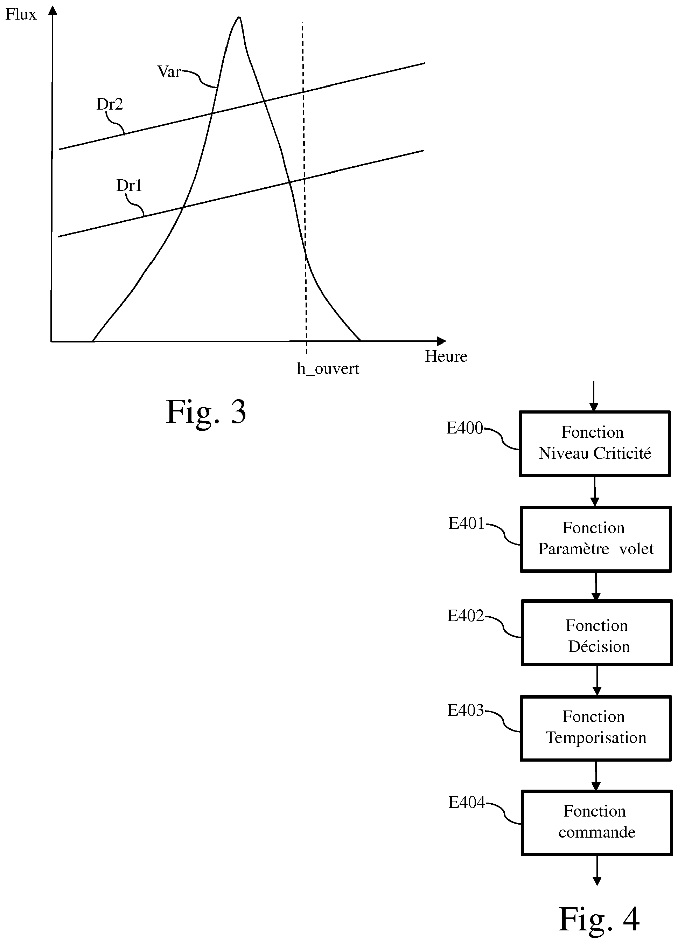

Le contrôleur 100 est adapté à effectuer à partir d'un ou plusieurs modules logiciels les étapes des algorithmes tels que décrits en référence aux Figs. 4 à 10.

Le contrôleur 100 comporte un bus de communication 201 auquel sont reliés un processeur 200, une mémoire non volatile 202, une mémoire vive 203, éventuellement une interface radio ou infrarouge 204 permettant la réception de codes issus d'une télécommande associée au contrôleur 100, une interface de commande 206 permettant la commande du dispositif d'occultation 101, et une interface capteurs 208 auxquels sont reliés les capteurs 102, 108, 106 et 109 ainsi que l'horloge.

La mémoire non volatile 202 mémorise le ou les modules logiciel(s) mettant en oeuvre l'invention, ainsi que les données permettant de mettre en oeuvre les algorithmes tels que décrits en référence aux Figs. 4 à 10.

De manière plus générale, les programmes selon la présente invention sont mémorisés dans un moyen de stockage. Ce moyen de stockage est lisible par le microprocesseur 200. Ce moyen de stockage est intégré ou non au contrôleur 100, et peut être amovible.

Lors de la mise sous tension du contrôleur 100, le ou les modules logiciel(s) selon la présente invention est ou sont transféré(s) dans la mémoire vive 203 qui contient alors le code exécutable selon la présente invention ainsi que les données nécessaires à la mise en oeuvre de l'invention.

Il est à remarquer ici que le contrôleur 100 peut être constitué d'un ou plusieurs composant(s) électronique(s).

La **Fig. 3** représente un exemple de courbe de variation du rayonnement solaire sur une période de vingt quatre heures ainsi que des droites permettant la décision de la commande d'au moins un dispositif d'occultation d'au moins une ouverture selon la présente invention.

Sur l'axe des abscisses est représenté le temps, sur l'axe des ordonnées est représenté le rayonnement solaire mesuré par le capteur 102.

La courbe Var représente les variations du rayonnement solaire mesuré par le capteur 102 sur une période de vingt quatre heures.

La droite Dr1 est la représentation d'une fonction affine dont le coefficient directeur alpha1 et l'ordonnée à l'origine SF1 sont fonction de la saison et d'un niveau de criticité.

La droite Dr2 est la représentation d'une fonction affine dont le coefficient directeur alpha2 et l'ordonnée à l'origine SF2 sont fonction de la période d'ensoleillement et du niveau de criticité.

Le niveau de criticité est représentatif de l'écart entre la température mesurée par le capteur 106 et un premier et un second seuils.

Le paramètre h_ouvert définit l'heure à partir de laquelle le dispositif d'occultation 101 laissera passer la totalité ou la quasi-totalité du rayonnement solaire à travers l'ouverture 103 si d'autres conditions, explicitées par la suite, sont remplies.

Lorsque le rayonnement solaire mesuré est, à un instant donné, supérieur à la valeur de rayonnement donnée par la courbe Dr2, le dispositif d'occultation 101 occulte totalement ou en quasi-totalité l'ouverture 103 si d'autres conditions, explicitées par la suite, sont remplies.

Une occultation totale ou en quasi totalité correspond à une occultation de 75 à 100% de la surface de l'ouverture 103.

Lorsque le rayonnement solaire mesuré est, à un instant donné, inférieur à la valeur de rayonnement donnée par la courbe Dr1, le dispositif d'occultation 101 laisse passer la totalité ou la quasi-totalité du rayonnement solaire à travers l'ouverture 103 si d'autres conditions, explicitées par la suite, sont remplies.

Le dispositif d'occultation 101 laisse passer la totalité ou la quasi-totalité du rayonnement solaire à travers l'ouverture 103 lorsque le dispositif d'occultation 101 occulte moins de 10% de la surface de l'ouverture 103.

Lorsque le rayonnement solaire mesuré est, à un instant donné, inférieur à la valeur de rayonnement donnée par la courbe Dr2 et supérieur à la valeur de rayonnement donnée par la courbe Dr1, le dispositif d'occultation 101 laisse passer partiellement le rayonnement solaire à travers l'ouverture 103 si d'autres conditions, explicitées par la suite, sont remplies.

Le dispositif d'occultation 101 laisse passer partiellement le rayonnement solaire à travers l'ouverture 103 lorsque le dispositif d'occultation 101 occulte entre 30 et 75% de la surface de l'ouverture 103.

La **Fig. 4** représente un diagramme illustrant l'algorithme général exécuté par le dispositif de commande d'au moins un dispositif d'occultation d'au moins une ouverture selon la présente invention.

Le présent algorithme est plus précisément exécuté par le processeur 200 du contrôleur 100.

Le présent algorithme est exécuté périodiquement, par exemple toutes les dix minutes ou avec une périodicité comprise entre deux et quinze minutes. A chaque exécution du présent algorithme, le processeur 200 obtient les différentes valeurs mesurées par les capteurs 102, 106, 108, 109, l'horodatage fourni par l'horloge 107 ainsi qu'une information.

L'étape E410 est une étape exécutée une fois par jour à une heure prédéterminée correspondant sensiblement au lever du jour.

L'heure du lever du jour est par exemple comprise entre 4 et 6 heures du matin ou est donnée par une horloge astronomique ou le lever du jour est par exemple détecté par le capteur de rayonnement 102 lorsque celui-ci mesure un rayonnement supérieur à une valeur comprise entre 5 à 10 W/m². Le capteur de rayonnement 102, lorsque la mesure du rayonnement dépasse la valeur comprise entre 5 à 10W/m2, notifie le contrôleur 100 du lever du jour ou le contrôleur 100, en prenant périodiquement la valeur mesurée par le capteur de rayonnement 102, détecte le lever du jour lorsque la valeur mesurée par le capteur de rayonnement 102 dépasse la valeur comprise entre 5 à 10W/m2.

Si la température extérieure au lever du jour est supérieure à 16 degrés, le contrôleur 100 détermine que la journée appartient à une saison de fort ensoleillement, c'est-à-dire l'été.

Si la température extérieure au lever du jour est supérieure à 10 degrés et inférieure à 16 degrés, le contrôleur 100 détermine que la journée appartient à une saison de faible ensoleillement, c'est-à-dire l'automne ou le printemps.

Si la température extérieure au lever du jour est inférieure à 10 degrés, le contrôleur 100 détermine que la journée appartient à une saison de faible ensoleillement, c'est-à-dire l'hiver.

L'appartenance de la journée à une des saisons susmentionnées est délivrée à la fonction niveau criticité, à la fonction paramètre volet, à la fonction temporisation et à la fonction commande.

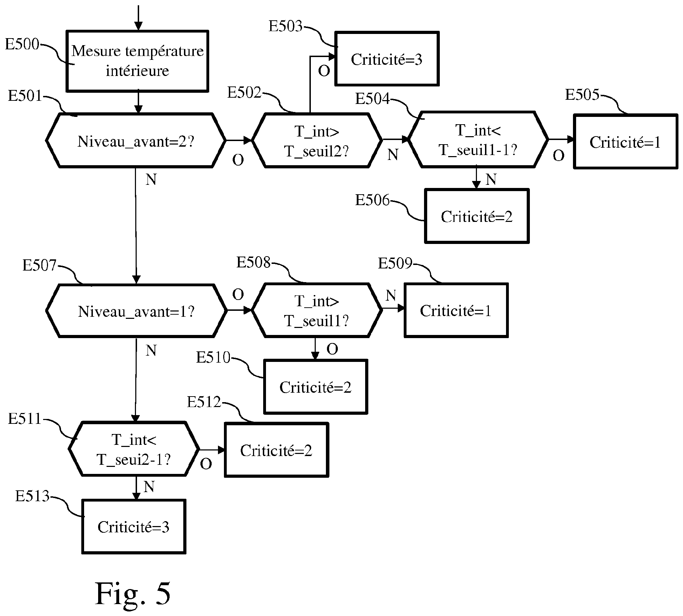

A l'étape E400, le processeur 200 lance l'exécution de la fonction niveau criticité qui sera décrite en détail en regard de la Fig. 5.

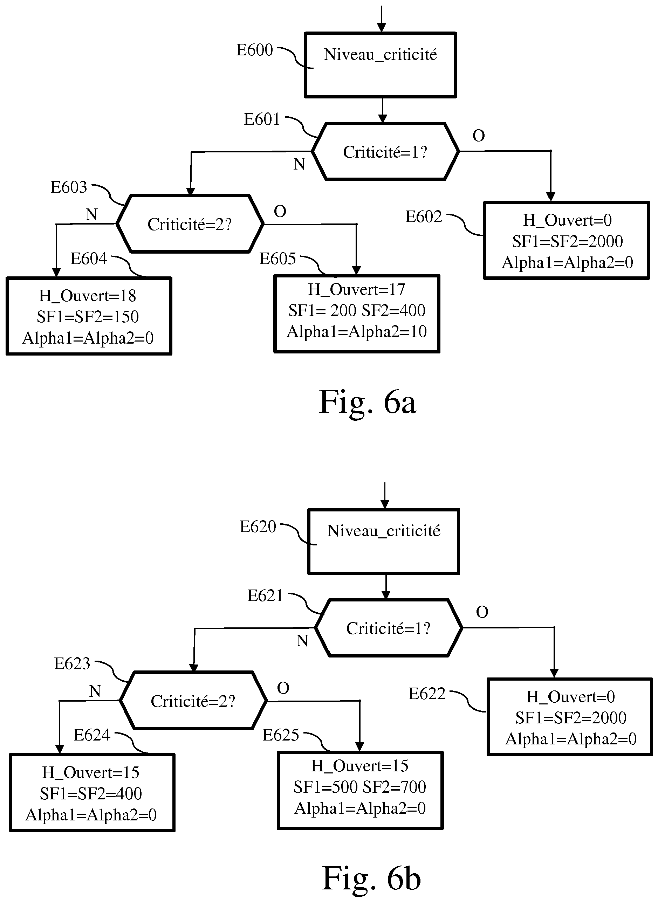

A l'étape suivante E401, le processeur 200 lance l'exécution de la fonction paramètre volet qui sera décrite en détail en regard de la Fig. 6a ou 6b.

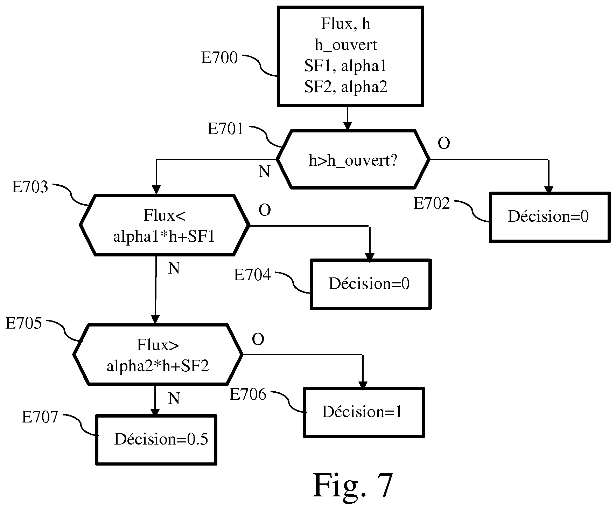

A l'étape suivante E402, le processeur 200 lance l'exécution de la fonction décision qui sera décrite en détail en regard de la Fig. 7.

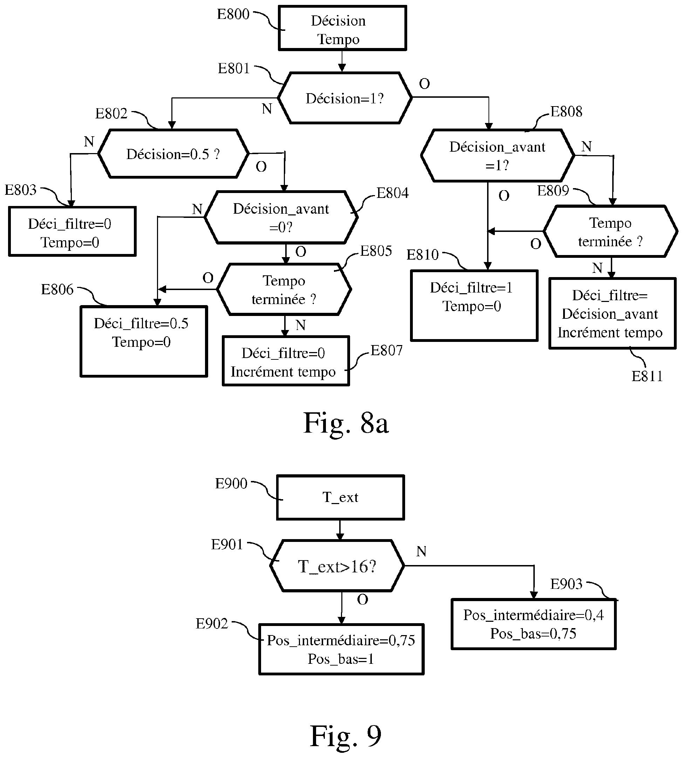

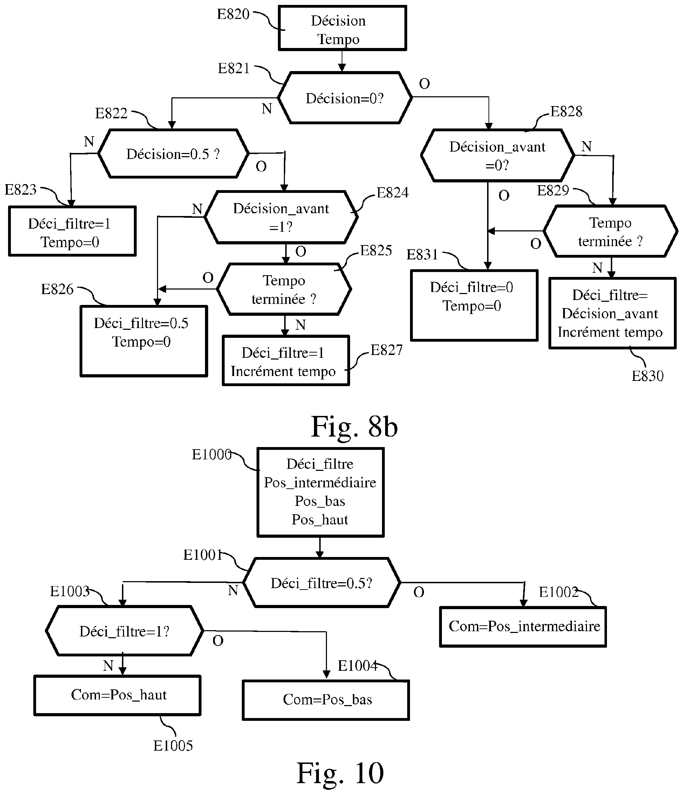

A l'étape suivante E403, le processeur 200 lance l'exécution de la fonction temporisation qui sera décrite en détail en regard de la Fig. 8a ou 8b.

A l'étape suivante E404, le processeur 200 lance l'exécution de la fonction commande qui sera décrite en détail en regard de la Fig. 10.

La **Fig. 5** représente un diagramme illustrant l'algorithme exécuté par le dispositif de commande pour l'exécution de la fonction criticité selon la présente invention.

Le présent algorithme est plus précisément exécuté par le processeur 200 du contrôleur 100.

A l'étape E500, le processeur 200 obtient la valeur de la température intérieure T_int de la pièce 10 mesurée par le capteur 106.

A l'étape suivante E501, le processeur 200 vérifie si la valeur de la variable Niveau_avant est égale à deux.

A la première exécution du présent algorithme, la variable Niveau_avant est initialisée à la valeur deux, ensuite la variable Niveau avant est la valeur du niveau de criticité déterminée lors de la précédente exécution de la fonction criticité.

Si la valeur de la variable Niveau_avant est égale à deux, le processeur 200 passe à l'étape E502.

Si la valeur de la variable Niveau_avant est différente de deux, le processeur 200 passe à l'étape E507.

A l'étape E502, le processeur 200 vérifie si la température intérieure T_int de la pièce 10 mesurée à l'étape E500 est supérieure à un seuil prédéterminé T_seuil2.

Le seuil prédéterminé T_seuil2 dépend des conditions climatiques déterminées au lever du soleil le jour où le présent algorithme est exécuté.

Par exemple, le seuil prédéterminé T_seuil2 est égal à 24 degrés lorsque la température mesurée au lever du soleil est inférieure à 16 degrés et est égal à 23 degrés lorsque la température mesurée au lever du soleil est supérieure à 16 degrés.

Dans un mode particulier de réalisation de la présente invention, la valeur du seuil T_seuil2 peut être augmentée ou diminuée d'un ou plusieurs degrés par l'interface homme machine du dispositif de contrôle du chauffage par exemple dans une plage comprise entre +/- 5 degrés.

Si la température intérieure T_int est supérieure au seuil prédéterminé T_seuil2, le processeur 200 passe à l'étape E503. Dans la négative, le processeur 200 passe à l'étape E504.

A l'étape E503, le processeur 200 met le niveau de criticité Niveau_criticité à la valeur trois et termine la fonction criticité.

A l'étape E504, le processeur 200 vérifie si la température intérieure T_int de la pièce 10 mesurée à l'étape E500 est inférieure à un seuil prédéterminé T_seuil1 minoré de un.

Le seuil prédéterminé T_seuil1 dépend de la saison déterminée à l'étape E410 au lever du soleil le jour où le présent algorithme est exécuté.

Par exemple, le seuil prédéterminé T_seuil1 est égal à 22 degrés lorsque la température mesurée au lever du soleil est inférieure à 16 degrés, c'est-à-dire lorsque qu'il est déterminé que la journée appartient à une saison de faible ensoleillement telle que l'hiver, l'automne et le printemps et est égal à 23 degrés lorsque la température mesurée au lever du soleil est supérieure à 16 degrés, c'est-à- dire lorsqu'il est déterminé que la journée appartient à une saison de fort ensoleillement telle que l'été.

Dans un mode particulier de réalisation de la présente invention, la valeur du seuil T_seuil1 peut être augmentée ou diminuée d'un ou plusieurs degrés par l'interface homme machine du dispositif de contrôle du chauffage par exemple dans une plage comprise entre +/- 5 degrés.

Si la température intérieure T_int est inférieure au seuil prédéterminé T_seuil1 minoré de un, le processeur 200 passe à l'étape E505. Dans la négative, le processeur 200 passe à l'étape E506.

A l'étape E505, le processeur 200 met le niveau de criticité Niveau_criticité à la valeur un et termine la fonction criticité.

A l'étape E506, le processeur 200 met le niveau de criticité Niveau_criticité à la valeur deux et termine la fonction criticité.

A l'étape E507, le processeur 200 vérifie si la valeur de la variable Niveau_avant est égale à un.

Si la valeur de la variable Niveau_avant est égale à un, le processeur 200 passe à l'étape E508.

Si la valeur de la variable Niveau_avant est différente de un, le processeur 200 passe à l'étape E511.

A l'étape E508, le processeur 200 vérifie si la température intérieure T_int est inférieure au seuil prédéterminé T_seuil1.

Si la température intérieure T_int est inférieure au seuil prédéterminé T_seuil1, le processeur 200 passe à l'étape E509. Dans la négative, le processeur 200 passe à l'étape E510.

A l'étape E509, le processeur 200 met le niveau de criticité Niveau_criticité à la valeur un et termine la fonction criticité.

A l'étape E510, le processeur 200 met le niveau de criticité Niveau_criticité à la valeur deux et termine la fonction criticité.

A l'étape E511, le processeur 200 vérifie si la température intérieure T_int est inférieure au seuil prédéterminé T_seuil2 minoré de un.

Si la température intérieure T_int est inférieure au seuil prédéterminé T_seuil2 minoré de un, le processeur 200 passe à l'étape E512. Dans la négative, le processeur 200 passe à l'étape E513.

A l'étape E512, le processeur 200 met le niveau de criticité Niveau_criticité à la valeur deux et termine la fonction criticité.

A l'étape E510, le processeur 200 met le niveau de criticité Niveau_criticité à la valeur trois et termine la fonction criticité.

La **Fig. 6a** représente un diagramme illustrant l'algorithme exécuté par le dispositif de commande pour la détermination, en période de fort ensoleillement, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E600, le processeur 200 obtient le niveau de criticité Niveau_criticité déterminé lors de l'exécution de l'algorithme de la Fig. 5.

A l'étape suivante E601, le processeur 200 vérifie si le niveau de criticité Niveau_criticité est égal à un.

Si le niveau de criticité Niveau_criticité est égal à un, le processeur 200 passe à l'étape E602. Dans la négative, le processeur 200 passe à l'étape E603.

A l'étape E602, le processeur 200 met le paramètre h_ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E603, le processeur 200 vérifie si le niveau de criticité Niveau_criticité est égal à deux.

Si le niveau de criticité Niveau_criticité est égal à deux, le processeur 200 passe à l'étape E605. Dans la négative, le processeur 200 passe à l'étape E604.

A l'étape E604, le processeur 200 met le paramètre h_ouvert à 18 heures, le coefficient directeur alpha1 à la valeur nulle, le coefficient directeur alpha2 à la valeur nulle, l'ordonnée à l'origine SF1 à la valeur 150, l'ordonnée à l'origine SF2 à la valeur 150 et termine la fonction paramètre volet.

A l'étape E605, le processeur 200 met le paramètre h ouvert à 17 heures, le coefficient directeur alpha1 à la valeur 10, le coefficient directeur alpha2 à la valeur 10, l'ordonnée à l'origine SF1 à la valeur 200, l'ordonnée à l'origine SF2 à la valeur 400 et termine la fonction paramètre volet.

La **Fig. 6b** représente un diagramme illustrant l'algorithme exécuté par le dispositif de commande pour la détermination, en période de faible ensoleillement, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E620, le processeur 200 obtient le niveau de criticité Niveau_criticité déterminé lors de l'exécution de l'algorithme de la Fig. 5.

A l'étape suivante E621, le processeur 200 vérifie si le niveau de criticité Niveau_criticité est égal à un.

Si le niveau de criticité Niveau_criticité est égal à un, le processeur 200 passe à l'étape E622. Dans la négative, le processeur 200 passe à l'étape E623.

A l'étape E622, le processeur 200 met le paramètre h_ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E623, le processeur 200 vérifie si le niveau de criticité Niveau_criticité est égal à deux.

Si le niveau de criticité Niveau_criticité est égal à deux, le processeur 200 passe à l'étape E625. Dans la négative, le processeur 200 passe à l'étape E624.

A l'étape E624, le processeur 200 met le paramètre h_ouvert à 15 heures, le coefficient directeur alpha 1 à la valeur nulle, le coefficient directeur alpha2 à la valeur nulle, l'ordonnée à l'origine SF1 à la valeur 400, l'ordonnée à l'origine SF2 à la valeur 400 et termine la fonction paramètre volet.

A l'étape E625, le processeur 200 met le paramètre h_ouvert à 15 heures, le coefficient directeur alpha 1 à la valeur nulle, le coefficient directeur alpha2 à la valeur nulle, l'ordonnée à l'origine SF1 à la valeur 500, l'ordonnée à l'origine SF2 à la valeur 700 et termine la fonction paramètre volet.

Les paramètres déterminés par la fonction paramètre volet sont, comme cela a été décrit en référence aux Figs. 6a et 6b, dépendants de la date à laquelle les mesures ont été effectuées.

La **Fig. 7** représente un diagramme illustrant l'algorithme exécuté par le dispositif de commande pour la détermination d'un paramètre de décision de la commande d'au moins un dispositif d'occultation d'au moins une ouverture selon la présente invention.

Le présent algorithme est plus précisément exécuté par le processeur 200 du contrôleur 100.

A l'étape E700, le processeur 200 obtient la valeur mesurée par le capteur de rayonnement 102, l'heure fournie par l'horloge 107 et les valeurs des variables SF1, SF2, alpha1, alpha2 et h ouvert déterminées lors de la précédente exécution de la fonction paramètre volet décrite en référence à la Fig. 6a ou 6b.

A l'étape E701, le processeur 200 vérifie si l'heure fournie par l'horloge 107 est supérieure à la valeur de la variable h_ouvert.

Si l'heure fournie par l'horloge 107 est supérieure à la valeur de la variable h_ouvert, le processeur 200 passe à l'étape E702. Dans la négative, le processeur 200 passe à l'étape E703.

A l'étape E702, le processeur 200 met la variable Décision à la valeur nulle et termine la fonction paramètre de décision.

Lorsque la variable Décision est à la valeur nulle, le dispositif d'occultation 101laisse passer la totalité ou la quasi-totalité du rayonnement solaire à travers l'ouverture 103 si d'autres conditions, explicitées par la suite, sont remplies.

Lorsque le rayonnement solaire mesuré est, à un instant donné, inférieur à la valeur de rayonnement donnée par la courbe Dr1, le dispositif d'occultation 101 laisse passer la totalité ou la quasi-totalité du rayonnement solaire à travers l'ouverture 103 si d'autres conditions, explicitées par la suite, sont remplies.

A l'étape E703, le processeur 200 vérifie si la valeur Flux du rayonnement mesuré par le capteur de rayonnement 102 est inférieure à la droite Dr1.

Si la valeur Flux mesurée par le capteur de rayonnement 102 est inférieure à la droite Dr1, le processeur 200 passe à l'étape E704. Dans la négative, le processeur 200 passe à l'étape E705.

A l'étape E704, le processeur 200 met la variable Décision à la valeur nulle et termine la fonction paramètre de décision.

A l'étape E703, le processeur 200 vérifie si la valeur Flux mesurée par le capteur de rayonnement 102 est supérieure à la droite Dr2.

Si la valeur Flux mesurée par le capteur de rayonnement 102 est supérieure à la droite Dr2, le processeur 200 passe à l'étape E706. Dans la négative, le processeur 200 passe à l'étape E707.

A l'étape E706, le processeur 200 met la variable Décision à la valeur un et termine la fonction paramètre de décision.

Lorsque la variable Décision est à la valeur un, le dispositif d'occultation 101 occulte totalement ou en quasi totalité l'ouverture 103 si d'autres conditions, explicitées par la suite, sont remplies.

A l'étape E707, le processeur 200 met la variable Décision à la valeur un demi et termine la fonction paramètre de décision.

Lorsque la variable Décision est à la valeur un demi, le dispositif d'occultation 101laisse passer partiellement le rayonnement solaire à travers l'ouverture 103.

Le paramètre Décision est, comme cela a été décrit en référence aux Figs. 6a et 6b, dépendant de la date à laquelle la mesure de la valeur Flux du rayonnement a été effectuée ainsi que de la température intérieure T_int.

La **Fig. 8a** représente un diagramme illustrant l'algorithme exécuté par le dispositif de commande pour la gestion, en période de faible ensoleillement, d'une fonction pour la commande d'au moins un dispositif d'occultation d'au moins une ouverture selon la présente invention.

Le présent algorithme est plus précisément exécuté par le processeur 200 du contrôleur 100.

A l'étape E800, le processeur 200 obtient la valeur de la variable décision déterminée par l'algorithme de la Fig. 7, la valeur du compteur journalier d'actionnement du dispositif d'occultation, ainsi que la valeur d'un seuil d'une temporisation qui est par exemple égal à 30 minutes ou compris entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermé.

A l'étape suivante E801, le processeur 200 vérifie si la variable Décision est égale à un.

Si la variable Décision est égale à un, le processeur 200 passe à l'étape E808. Dans la négative, le processeur 200 passe à l'étape E802.

A l'étape E802, le processeur 200 vérifie si la variable Décision est égale à un demi.

Si la variable Décision est égale à un demi, le processeur 200 passe à l'étape E804. Dans la négative, le processeur 200 passe à l'étape E803.

A l'étape E803, le processeur 200 met la variable Déci_filtre à la valeur nulle, met la variable Tempo à la valeur nulle et termine la fonction temporisation.

Lorsque la variable Déci_filtre est à la valeur nulle, le dispositif d'occultation 101 laisse passer la totalité du rayonnement solaire à travers l'ouverture 103 si d'autres conditions, explicitées par la suite, sont remplies.

A l'étape E804, le processeur 200 vérifie si la variable Décision_avant est nulle.

La variable Décision_avant est la valeur déterminée par l'algorithme de la Fig. 7 lors de la précédente exécution de l'algorithme de la Fig. 4.

Si la variable Décision_avant est nulle, le processeur 200 passe à l'étape E805. Dans la négative, le processeur 200 passe à l'étape E806.

A l'étape E805, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E806. Dans la négative, le processeur 200 passe à l'étape E807.

Dans un mode particulier de réalisation de la présente invention, le processeur 200 vérifie en outre à l'étape E805 si la valeur d'un compteur journalier d'actionnement du dispositif d'occultation est supérieure à la valeur trois. Si la valeur d'un compteur journalier est supérieure à trois, le processeur 200 passe à l'étape E807. Si la valeur du compteur journalier est inférieure ou égale à trois et si la valeur de la variable Tempo est supérieure ou égale au seuil d'une temporisation, le processeur 200 passe à l'étape E806.

A l'étape E806, le processeur 200 met la variable Déci_filtre à la valeur un demi, met la variable Tempo à la valeur nulle et termine la fonction temporisation.

Lorsque la variable Déci_filtre est à la valeur un demi, le dispositif d'occultation 101laisse passer une partie du rayonnement solaire à travers l'ouverture 103 si d'autres conditions, explicitées par la suite, sont remplies.

A l'étape E807, le processeur 200 met la variable Déci_filtre à la valeur nulle, incrémente la variable Tempo à la valeur correspondant à la périodicité d'exécution de l'algorithme de la Fig. 4 et termine la fonction temporisation.

A l'étape E808, le processeur 200 vérifie si la variable Décision_avant est égale à un.

Si la variable Décision_avant est égale à un, le processeur 200 passe à l'étape E810. Dans la négative, le processeur 200 passe à l'étape E809.

A l'étape E809, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E810. Dans la négative, le processeur 200 passe à l'étape E811.

A l'étape E810, le processeur 200 met la variable Déci_filtre à la valeur un, met la variable Tempo à la valeur nulleet termine la fonction temporisation.

Lorsque la variable Déci filtre est à la valeur un, le dispositif d'occultation 101 laisse passer une partie ou ne laisse pas passer le rayonnement solaire à travers l'ouverture 103 si d'autres conditions, explicitées par la suite, sont remplies.

A l'étape E811, le processeur 200 met la variable Déci filtre à la valeur de la variable Décision_avant, incrémente la variable Tempo à la valeur correspondant à la périodicité d'exécution de l'algorithme de la Fig. 4 et termine la fonction temporisation.

Comme cela a été décrit en référence à la Fig. 8a, si les conditions climatiques correspondent à une période de faible ensoleillement, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

La **Fig. 8b** représente un diagramme illustrant l'algorithme exécuté par le dispositif de commande pour la gestion, lorsque la température mesurée au lever du soleil est supérieure à 16 degrés, d'une temporisation pour la commande d'au moins un dispositif d'occultation d'au moins une ouverture selon la présente invention.

Le présent algorithme est plus précisément exécuté par le processeur 200 du contrôleur 100.

A l'étape E820, le processeur obtient la valeur de la variable décision déterminée par l'algorithme de la Fig. 7, la valeur du compteur journalier d'actionnement du dispositif d'occultation, ainsi que la valeur d'un seuil d'une temporisation qui est par exemple égale à 30 minutes ou comprise entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermé.

A l'étape suivante E821, le processeur 200 vérifie si la variable Décision est nulle.

Si la variable Décision est égale nulle, le processeur 200 passe à l'étape E828. Dans la négative, le processeur 200 passe à l'étape E822.

A l'étape E822, le processeur 200 vérifie si la variable Décision est égale à un demi.

Si la variable Décision est égale à un demi, le processeur 200 passe à l'étape E824. Dans la négative, le processeur 200 passe à l'étape E823.

A l'étape E823, le processeur 200 met la variable Déci_filtre à la valeur un, met la variable Tempo à la valeur nulle et termine la fonction temporisation.

A l'étape E824, le processeur 200 vérifie si la variable Décision_avant est égale à un.

Si la variable Décision_avant est nulle, le processeur 200 passe à l'étape E825. Dans la négative, le processeur 200 passe à l'étape E826.

A l'étape E825, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E826. Dans la négative, le processeur 200 passe à l'étape E827.

Dans un mode particulier de réalisation de la présente invention, le processeur 200 vérifie en outre à l'étape E825 si la valeur d'un compteur journalier d'actionnement du dispositif d'occultation est supérieure à la valeur trois. Si la valeur d'un compteur journalier est supérieure à trois, le processeur 200 passe à l'étape E827. Si la valeur du compteur journalier est inférieure ou égale à trois et si la valeur de la variable Tempo est supérieure ou égale au seuil d'une temporisation, le processeur 200 passe à l'étape E826.

A l'étape E826, le processeur 200 met la variable Déci_filtre à la valeur un demi, met la variable Tempo à la valeur nulle et termine la fonction temporisation.

A l'étape E827, le processeur 200 met la variable Déci_filtre à la valeur un, incrémente la variable Tempo à la valeur correspondant à la périodicité d'exécution de l'algorithme de la Fig. 4 et termine la fonction temporisation.

Lorsque la variable Déci_filtre est à la valeur un, le dispositif d'occultation 101 laisse passer une partie ou ne laisse pas passer le rayonnement solaire à travers l'ouverture 103 si d'autres conditions, explicitées par la suite, sont remplies.

A l'étape E828, le processeur 200 vérifie si la variable Décision_avant est nulle.

Si la variable Décision_avant est nulle, le processeur 200 passe à l'étape E831. Dans la négative, le processeur 200 passe à l'étape E829.

A l'étape E829, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E831. Dans la négative, le processeur 200 passe à l'étape E830.

Dans un mode particulier de réalisation de la présente invention, le processeur 200 vérifie en outre à l'étape E829 si la valeur d'un compteur journalier d'actionnement du dispositif d'occultation est supérieure à la valeur trois. Si la valeur d'un compteur journalier est supérieure à trois, le processeur 200 passe à l'étape E831. Si la valeur du compteur journalier est inférieure ou égale à trois et si la valeur de la variable Tempo est supérieure ou égale au seuil d'une temporisation, le processeur 200 passe à l'étape E830.

A l'étape E831, le processeur 200 met la variable Déci_filtre à la valeur nulle, met la variable Tempo à la valeur nulle et termine la fonction temporisation.

A l'étape E830, le processeur 200 met la variable Déci_filtre à la valeur de la variable Décision_avant, incrémente la variable Tempo à la valeur correspondant à la périodicité d'exécution de l'algorithme de la Fig. 4 et termine la fonction temporisation.

Comme cela a été décrit en référence à la Fig. 8b, si les conditions climatiques déterminées au lever du jour correspondent à une période de fort ensoleillement, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

La **Fig. 9** représente un diagramme illustrant l'algorithme exécuté par le dispositif de commande pour la détermination, en période de fort ensoleillement, de différentes positions d'au moins un dispositif d'occultation d'au moins une ouverture selon la présente invention.

Le présent algorithme est plus précisément exécuté par le processeur 200 du contrôleur 100 tous les jours entre 4H00mn et 6H00mn du matin ou au lever du jour.

A l'étape E900, le processeur 200 obtient la saison déterminée à l'étape E410 de l'algorithme de la Fig. 4.

A l'étape suivante E901, le processeur 200 vérifie si la saison correspond à une période de fort ensoleillement telle que l'été.

Si la saison correspond à une période de fort ensoleillement telle que l'été, le processeur 200 passe à l'étape E902. Dans la négative, le processeur 200 passe à l'étape E903.

A l'étape E902, le processeur 200 met la variable position intermédiaire Pos_intermédiaire à la valeur 0,75 et la variable position bas Pos_bas à la valeur 1et termine l'algorithme de la Fig. 9.

Lorsque la variable Pos_bas est à la valeur un, le dispositif d'occultation 101 occulte totalement ou en quasi totalité l'ouverture 103 si d'autres conditions, explicitées par la suite, sont remplies.

Lorsque la variable Pos_intermédiaire est à la valeur 0,75, le dispositif d'occultation 101occulte 75% de la surface de l'ouverture 103.

A l'étape E903, le processeur 200 met la variable position intermédiaire Pos_intermédiaire à la valeur 0,4 et la variable position bas Pos_bas à la valeur 0.75 et termine l'algorithme de la Fig. 9.

Lorsque la variable Pos_bas est à la valeur 0.4, le dispositif d'occultation 101occulte 40% de la surface de l'ouverture 103.

La position Poshaut correspondant à la configuration dans laquelle le dispositif d'occultation 101laisse passer la totalité ou la quasi-totalité du rayonnement solaire à travers l'ouverture 103 si d'autres conditions, explicitées par la suite, sont remplies.

La **Fig. 10** représente un diagramme illustrant l'algorithme exécuté par le dispositif de commande pour la détermination d'un paramètre de commande d'au moins un dispositif d'occultation d'au moins une ouverture selon la présente invention.

Le présent algorithme est plus précisément exécuté par le processeur 200 du contrôleur 100.

A l'étape E1000, le processeur 200 obtient la valeur de la variable Déci_filtre déterminée par la fonction décrite en référence à la Fig. 8a ou 8b et les valeurs des variables Pos_bas, Pos_intermédiaire et Pos_bas déterminées par la fonction décrite en référence à la Fig. 9.

A l'étape E1001, le processeur 200 vérifie si la valeur de la variable Déci_filtre est égale à un demi.

Si la valeur de la variable Déci filtre est égale à un demi, le processeur 200 passe à l'étape E1002. Dans la négative, le processeur 200 passe à l'étape 1001.

A l'étape E1002, le processeur 200 met la variable Com à la valeur de la variable Pos_Intermédiaire et commande le dispositif d'occultation pour que celui-ci se place à la position correspondante et interrompt l'exécution de l'algorithme.

A l'étape E1003, le processeur 200 vérifie si la valeur de la variable Déci_filtre est égale à un.

Si la valeur de la variable Déci filtre est égale à un, le processeur 200 passe à l'étape E1004. Dans la négative, le processeur 200 passe à l'étape 1005.

A l'étape E1004, le processeur 200 met la variable Com à la valeur de la variable Pos_bas et commande le dispositif d'occultation pour que celui-ci se place à la position correspondante et interrompt l'exécution de l'algorithme.

A l'étape E1005, le processeur 200 met la variable Com à la valeur de la variable Pos_haut et commande le dispositif d'occultation pour que celui-ci laisse passer la totalité du rayonnement solaire à travers l'ouverture.

Lorsque la variable Com est égale à Pos_bas, le dispositif d'occultation 101 ne laisse pas le rayonnement solaire à travers l'ouverture.

La présente invention est décrite dans un exemple de réalisation dans lequel deux périodes d'ensoleillement sont considérées.

La présente invention est aussi applicable lorsqu'un nombre supérieur de périodes est considéré. Par exemple une période correspondant à l'hiver, une période correspondant à l'été et une période correspondant à l'automne et le printemps ou une période correspondant à l'hiver, une période correspondant à l'été, une période correspondant à l'automne et une période correspondant au le printemps. De même, l'invention est aussi applicable dans une configuration selon laquelle la commande des volets selon la présente invention ne sera exécutée que dans une seule période de temps, par exemple en hiver ou en hiver et une partie de l'automne et du printemps, la présente invention ne commandant pas le dispositif d'occultation pendant l'été.

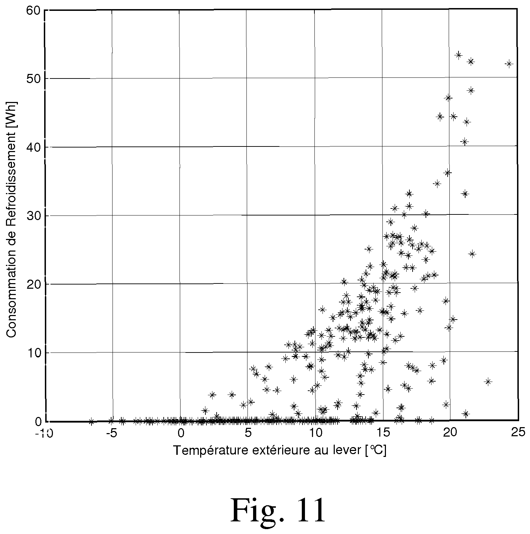

**La** **Fig. 11** représente un exemple de mesures de la consommation journalière d'une climatisation en fonction de la température extérieure au lever du soleil.

Comme le montre la Fig. 11, lorsque la température extérieure au lever du jour est inférieure à 10 degrés, un système de rafraîchissement de la pièce, telle qu'une climatisation ne fonctionne pas dans la majorité des exemples donnés dans la Fig. 11.

De même, lorsque la température extérieure au lever du jour est supérieure à 16 degrés, un système de rafraîchissement de la pièce fonctionne dans la majorité des exemples donnés dans la Fig. 11.

Enfin, lorsque la température extérieure au lever du jour est supérieure à 10 degrés et inférieure à 16 degrés, un système de rafraîchissement de la pièce, fonctionne de manière limitée dans la majorité des exemples donnés dans la Fig. 11.

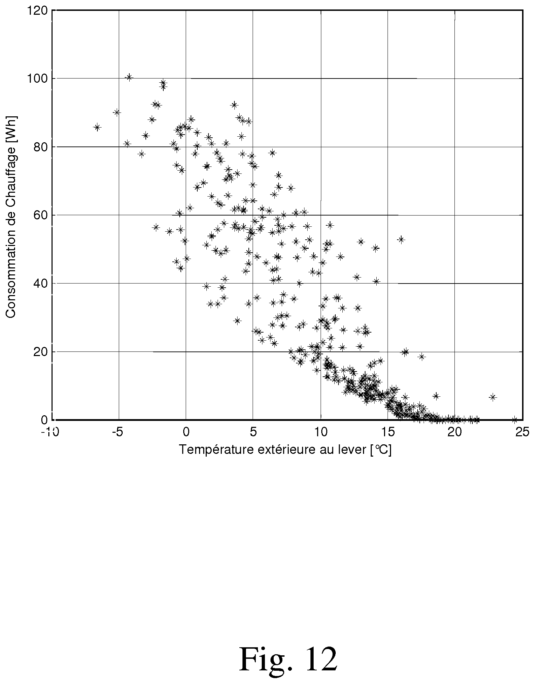

**La** **Fig. 12** représente un exemple de mesures de la consommation journalière du chauffage en fonction de la température extérieure au lever du soleil.

Comme le montre la Fig. 12, lorsque la température extérieure au lever du jour est inférieure à 10 degrés, un système de chauffage de la pièce, fonctionne dans la majorité des exemples donnés dans la Fig. 12.

De même, lorsque la température extérieure au lever du jour est supérieure à 16 degrés, un système de chauffage de la pièce ne fonctionne dans la majorité des exemples donnés dans la Fig. 12.

Enfin, lorsque la température extérieure au lever du jour est supérieure à 10 degrés et inférieure à 16 degrés, un système de chauffage de la pièce, fonctionne de manière limitée dans la majorité des exemples donnés dans la Fig. 12.

Comme cela est montré en Figs. 11 et 12, les seuils de décision de 10 et 16 degrés sont particulièrement adaptés selon la présente invention.

## Revendications

1. Procédé de détermination des conditions climatiques d'une journée pour commander au moins un dispositif d'apport d'énergie naturelle pour une pièce d'un bâtiment, **caractérisé en ce que** le procédé comporte les étapes de :
- obtention d'une température extérieure au bâtiment au lever du soleil,
- comparaison de la température extérieure obtenue à un premier seuil prédéterminé,
- détermination des conditions climatiques pour la journée en fonction du résultat de la comparaison de la température extérieure obtenue au premier seuil prédéterminé compris entre 15 et 17 degrés Celsius,
- détermination d'au moins un paramètre de commande du au moins un dispositif d'apport d'énergie naturelle en fonction des conditions climatiques déterminées.

2. Procédé selon la revendication 1, **caractérisé en ce que** la température extérieure est comparée à un second seuil prédéterminé compris entre 9 et 11 degrés et **en ce que** si la température extérieure est inférieure au second seuil prédéterminé, les conditions climatiques sont hivernales, si la température extérieure est comprise entre le premier et le second seuils prédéterminés, les conditions climatiques sont automnales ou printanières et si la température supérieure au premier seuil prédéterminé, les conditions climatiques sont estivales.

3. Procédé selon la revendication 1 ou 2, **caractérisé en ce que** le dispositif d'apport d'énergie naturelle est un dispositif d'occultation (101) d'au moins une ouverture (103) de la pièce (10).

4. Procédé selon la revendication 3, **caractérisé en ce que** le paramètre de commande déterminé en fonction des conditions climatiques déterminées est une position d'occultation partielle de l'ouverture.

5. Procédé selon la revendication 3 ou 4, **caractérisé en ce que** le procédé comporte entre outre les étapes de :
- obtention de la température de la pièce (106) du bâtiment,
- comparaison de la température de la pièce du bâtiment avec au moins un troisième seuil de température et **en ce que** la valeur du au moins un troisième seuil de température dépend des conditions climatiques déterminées.

6. Procédé selon la revendication 5, **caractérisé en ce que** le procédé comporte entre outre les étapes de :
- obtention d'une valeur du rayonnement solaire (102, 110),
- comparaison de la valeur du rayonnement solaire obtenu avec au moins un seuil de comparaison et **en ce que** le seuil de comparaison du rayonnement solaire déterminé en fonction des conditions climatiques déterminées.

7. Procédé selon la revendication 6, **caractérisé en ce que** le seuil de comparaison du rayonnement solaire est en outre déterminé en fonction de l'heure (107) à laquelle la température de la pièce (106) du bâtiment et le rayonnement solaire (102, 110) sont obtenus.

8. Procédé selon l'une quelconque des revendications 5 à 7, **caractérisé en ce que** le procédé est exécuté itérativement, le dispositif d'occultation (101) étant commandé pour prendre trois positions différentes et **en ce que** le procédé comporte en outre une étape d'annulation de la commande du dispositif d'occultation qui est dépendante de la position du dispositif d'occultation lors de la précédente itération et des conditions climatiques déterminées.

9. Procédé selon la revendication 8, **caractérisé en ce que** si les conditions climatiques déterminées sont estivales, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

10. Procédé selon la revendication 8 ou 9, **caractérisé en ce que** si les conditions climatiques déterminées ne sont pas sont estivales, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

11. Procédé selon l'une quelconque des revendications 3 à 9, **caractérisé en ce que** le procédé comporte en outre une étape de comptage du nombre d'ouverture ou de fermeture journalier du dispositif d'occultation d'au moins une ouverture d'une pièce du bâtiment et de limitation du nombre d'ouverture ou de fermeture journalier du dispositif d'occultation.

12. Dispositif de détermination des conditions climatiques d'une journée pour commander au moins un dispositif d'apport d'énergie naturelle pour une pièce d'un bâtiment, **caractérisé en ce que** le dispositif comporte :
- des moyens d'obtention d'une température extérieure au bâtiment au lever du soleil,
- des moyens de comparaison de la température extérieure obtenue à un premier seuil prédéterminé,
- des moyens de détermination des conditions climatiques pour la journée en fonction du résultat de la comparaison de la température extérieure obtenue au premier seuil prédéterminé compris entre 15 et 17 degrés Celsius,
- des moyens de détermination d'au moins un paramètre de commande du au moins un dispositif d'apport d'énergie naturelle en fonction des conditions climatiques déterminées.

## Patentansprüche

1. Verfahren zur Bestimmung der klimatischen Bedingungen eines Tages zur Steuerung mindestens einer Vorrichtung zum Zuführen von natürlicher Energie für einen Raum eines Gebäudes, **dadurch gekennzeichnet, dass** das Verfahren die folgenden Schritte umfasst:
- Erhalten einer Außentemperatur des Gebäudes bei Sonnenaufgang,
- Vergleichen der erhaltenen Außentemperatur mit einem ersten vorbestimmten Schwellenwert,
- Bestimmen der klimatischen Bedingungen für den Tag in Abhängigkeit vom Ergebnis des Vergleichs der erhaltenen Außentemperatur mit dem ersten vorbestimmten Schwellenwert, der zwischen 15 und 17 Grad Celsius liegt,
- Bestimmen mindestens eines Parameters zur Steuerung der mindestens einen Vorrichtung zum Zuführen von natürlicher Energie in Abhängigkeit von den bestimmten klimatischen Bedingungen.

2. Verfahren nach Anspruch 1, **dadurch gekennzeichnet, dass** die Außentemperatur mit einem zweiten vorbestimmten Schwellenwert verglichen wird, der zwischen 9 und 11 Grad liegt, und dadurch, dass, wenn die Außentemperatur unter dem zweiten vorbestimmten Schwellenwert liegt, die klimatischen Bedingungen winterlich sind, wenn die Außentemperatur zwischen dem ersten und dem zweiten vorbestimmten Schwellenwert liegt, die klimatischen Bedingungen herbstlich oder frühlingshaft sind, und wenn die Temperatur über dem ersten vorbestimmten Schwellenwert liegt, die klimatischen Bedingungen sommerlich sind.

3. Verfahren nach Anspruch 1 oder 2, **dadurch gekennzeichnet, dass** die Vorrichtung zum Zuführen von natürlicher Energie eine Verdunkelungsvorrichtung (101) für mindestens eine Öffnung (103) des Raums (10) ist.

4. Verfahren nach Anspruch 3, **dadurch gekennzeichnet, dass** der in Abhängigkeit von den bestimmten klimatischen Bedingungen bestimmte Steuerungsparameter eine Position der teilweisen Verdunkelung der Öffnung ist.

5. Verfahren nach Anspruch 3 oder 4, **dadurch gekennzeichnet, dass** das Verfahren ferner die folgenden Schritte umfasst:
- Erhalten der Temperatur des Raums (106) des Gebäudes,
- Vergleichen der Temperatur des Raums des Gebäudes mit mindestens einem dritten Temperaturschwellenwert, und dadurch, dass der Wert des mindestens einen dritten Temperaturschwellenwerts von den bestimmten klimatischen Bedingungen abhängt.

6. Verfahren nach Anspruch 5, **dadurch gekennzeichnet, dass** das Verfahren ferner die folgenden Schritte umfasst:
- Erhalten eines Werts für die Sonneneinstrahlung (102, 110),
- Vergleichen des erhaltenen Werts für die Sonneneinstrahlung mit mindestens einem Vergleichsschwellenwert, und dadurch, dass der Vergleichsschwellenwert in Abhängigkeit von den bestimmten klimatischen Bedingungen bestimmt wird.

7. Verfahren nach Anspruch 6, **dadurch gekennzeichnet, dass** der Vergleichsschwellenwert für die Sonneneinstrahlung ferner in Abhängigkeit von der Uhrzeit (107) bestimmt wird, zu der die Temperatur des Raums (106) des Gebäudes und die Sonneneinstrahlung (102, 110) erhalten werden.

8. Verfahren nach einem der Ansprüche 5 bis 7, **dadurch gekennzeichnet, dass** das Verfahren iterativ ausgeführt wird, wobei die Verdunkelungsvorrichtung (101) gesteuert wird, um drei verschiedene Positionen einzunehmen, und dadurch, dass das Verfahren ferner einen Schritt der Annullierung der Steuerung der Verdunkelungsvorrichtung umfasst, der von der Position der Verdunkelungsvorrichtung bei der vorhergehenden Iteration und von den bestimmten klimatischen Bedingungen abhängt.

9. Verfahren nach Anspruch 8, **dadurch gekennzeichnet, dass**, wenn die bestimmten klimatischen Bedingungen sommerlich sind, die Steuerung der Verdunkelungsvorrichtung während eines bestimmten Zeitraums annulliert wird, wenn die Verdunkelungsvorrichtung bei der vorhergehenden Iteration in einer Position ist, die einer weniger großen Menge Sonneneinstrahlung ermöglicht, die Öffnung zu durchdringen als die, die von der Position der Verdunkelungsvorrichtung ermöglicht wird, deren Steuerung annulliert wird.

10. Verfahren nach Anspruch 8 oder 9, **dadurch gekennzeichnet, dass**, wenn die bestimmten klimatischen Bedingungen nicht sommerlich sind, die Steuerung der Verdunkelungsvorrichtung während eines bestimmten Zeitraums annulliert wird, wenn die Verdunkelungsvorrichtung bei der vorhergehenden Iteration in einer Position ist, die es einer größeren Menge Sonneneinstrahlung ermöglicht, die Öffnung zu durchdringen als die, die von der Position der Verdunkelungsvorrichtung ermöglicht wird, deren Steuerung annulliert wird.

11. Verfahren nach einem der Ansprüche 3 bis 9, **dadurch gekennzeichnet, dass** das Verfahren ferner einen Schritt des Zählens der Anzahl der täglichen Öffnungs- und Schließvorgänge der Verdunkelungsvorrichtung mindestens einer Öffnung eines Raums eines Gebäudes und des Beschränkens der Anzahl der täglichen Öffnungs- und Schließvorgänge der Verdunkelungsvorrichtung umfasst.

12. Verfahren zur Bestimmung der klimatischen Bedingungen eines Tages zur Steuerung mindestens einer Vorrichtung zum Zuführen von natürlicher Energie für einen Raum eines Gebäudes, **dadurch gekennzeichnet, dass** die Vorrichtung aufweist:
- Einrichtungen zum Erhalten einer Außentemperatur des Gebäudes bei Sonnenaufgang,
- Einrichtungen zum Vergleichen der erhaltenen Außentemperatur mit einem ersten vorbestimmten Schwellenwert,
- Einrichtungen zum Bestimmen der klimatischen Bedingungen für den Tag in Abhängigkeit vom Ergebnis des Vergleichs der erhaltenen Außentemperatur mit dem ersten vorbestimmten Schwellenwert, der zwischen 15 und 17 Grad Celsius liegt,
- Einrichtungen zum Bestimmen mindestens eines Parameters zur Steuerung der mindestens einen Vorrichtung zum Zuführen von natürlicher Energie in Abhängigkeit von den bestimmten klimatischen Bedingungen.

## Claims

1. Method for determining the climatic conditions of a day so as to control at least one device for supplying natural energy for a room of a building, **characterized in that** the method comprises the steps of:
- obtaining a temperature outside the building at sunrise,
- comparing the outside temperature obtained with a first predetermined threshold,
- determining the climatic conditions for the day as a function of the result of the comparing of the outside temperature obtained with the first predetermined threshold lying between 15 and 17 degrees Celsius,
- determining at least one control parameter of the at least one device for supplying natural energy as a function of the climatic conditions determined.

2. Method according to Claim 1, **characterized in that** the outside temperature is compared with a second predetermined threshold lying between 9 and 11 degrees and **in that** if the outside temperature is less than the second predetermined threshold, the climatic conditions are winter-like, if the outside temperature lies between the first and the second predetermined thresholds, the climatic conditions are autumnal or spring-like and if the temperature greater than the first predetermined threshold, the climatic conditions are summer-like.

3. Method according to Claim 1 or 2, **characterized in that** the device for supplying natural energy is an occultation device (101) for shutting off at least one opening (103) of the room (10).

4. Method according to Claim 3, **characterized in that** the control parameter determined as a function of the climatic conditions determined is a position of partial occultation of the opening.

5. Method according to Claim 3 or 4, **characterized in that** the method comprises in addition the steps of:
- obtaining the temperature of the room (106) of the building,
- comparing the temperature of the room of the building with at least one third temperature threshold and **in that** the value of the at least one third temperature threshold depends on the climatic conditions determined.

6. Method according to Claim 5, **characterized in that** the method comprises in addition the steps of:
- obtaining a value of the solar radiation (102, 110),
- comparing the value of the solar radiation obtained with at least one comparison threshold and **in that** the threshold of comparison of the solar radiation is determined as a function of the climatic conditions determined.

7. Method according to Claim 6, **characterized in that** the threshold of comparison of the solar radiation is furthermore determined as a function of the time (107) at which the temperature of the room (106) of the building and the solar radiation (102, 110) are obtained.

8. Method according to any one of Claims 5 to 7, **characterized in that** the method is executed iteratively, the occultation device (101) being controlled so as to take three different positions and **in that** the method furthermore comprises a step of cancelling the occultation device's control which is dependent on the position of the occultation device during the previous iteration and on the climatic conditions determined.

9. Method according to Claim 8, **characterized in that** if the climatic conditions determined are summer-like, the control of the occultation device is cancelled during a given period if the occultation device is, at the previous iteration, in a position allowing a less significant quantity of solar radiation to pass through the opening than that allowed by the position of the occultation device whose control is cancelled.

10. Method according to Claim 8 or 9, **characterized in that** if the climatic conditions determined are not are summer-like, the control of the occultation device is cancelled during a given period if the occultation device is, at the previous iteration, in a position allowing a more significant quantity of solar radiation to pass through the opening than that allowed by the position of the occultation device whose control is cancelled.

11. Method according to any one of Claims 3 to 9, **characterized in that** the method furthermore comprises a step of counting the daily number of opening or of closing of the occultation device in respect of at least one opening of a room of the building and of limiting the daily number of opening or of closing of the occultation device.

12. Device for determining the climatic conditions of a day so as to control at least one device for supplying natural energy for a room of a building, **characterized in that** the device comprises:
- means for obtaining a temperature outside the building at sunrise,
- means for comparing the outside temperature obtained with a first predetermined threshold,
- means for determining the climatic conditions for the day as a function of the result of the comparing of the outside temperature obtained with the first predetermined threshold lying between 15 and 17 degrees Celsius,
- means for determining at least one control parameter of the at least one device for supplying natural energy as a function of the climatic conditions determined.
